# EUROPÄISCHE PATENTSCHRIFT

(11) **EP 2 746 098 B1**
(45) Veröffentlichungstag und Bekanntmachung des Hinweises auf die Patenterteilung: **18.05.2016**
(21) Anmeldenummer: 13196759.8
(22) Anmeldetag: 11.12.2013
(51) Int. Cl.: B60N 2/46

(54) **ARMLEHNENANORDNUNG FÜR EINEN SITZ, INSBESONDERE FÜR EINEN FAHRZEUGSITZ**
ARMREST ASSEMBLY FOR A SEAT, IN PARTICULAR FOR A VEHICLE SEAT
AGENCEMENT D'ACCOUDOIR POUR UN SIÈGE, NOTAMMENT POUR UN SIÈGE DE VÉHICULE

(30) Priorität: 18.12.2012 DE 102012112558
(43) Veröffentlichungstag der Anmeldung: 25.06.2014
(73) Patentinhaber: GRAMMER AG, 92224 Amberg (DE)
(72) Erfinder: Ott, Richard, 92245 Kümmersbruck (DE); Meiller, Hermann, 92533 Wernberg-Köblitz (DE)
(74) Vertreter: Hannke, Christian

(56) Entgegenhaltungen:
- JP-U- H01 131 357
- US-A- 5 743 595
- US-A1- 2002 096 928

## Beschreibung

Die Erfindung betrifft eine Armlehnenanordnung für einen Sitz, insbesondere für einen Fahrzeugsitz, sowie einen Fahrzeugsitz mit einer solchen Armlehnenanordnung.

Die Armlehnenanordnung für einen Sitz, insbesondere für einen Fahrzeugsitz, umfasst eine Armlehne, die mittels einer Lagerachse mit einem Armlehnenträger schwenkbeweglich verbunden ist, gemäß dem Oberbegriff des Patentanspruches 1.

Gattungsgemäße Armlehnenanordnungen sind bereits aus dem Stand der Technik wohl bekannt.

Beispielsweise ist in dem deutschen Gebrauchsmuster DE 6939112 eine Armlehne an der Rückenlehne eines Kraftwagens gezeigt, wobei die Armlehne an der verstellbaren Rücklehne des Kraftwagensitzes in einer Nichtgebrauchsstellung nach oben schwenkbar angeordnet ist. Dazu umfasst die Armlehne zu einer stufenlosen Einstellung der Neigung der Armlehne zur Rückenlehne einen drehfest an der Rückenlehne angeordneten Abstütznocken und eine an der Armlehne gelagerte, gegen und von dem Abstütznocken wegbewegliche Abstützstange. Durch ein Bewegen der Abstützstange gegen den fest an der Rückenlehne montierten Abstütznocken kann die Armlehne in unterschiedlichen Neigungswinkeln zu der Rückenlehne verstellt werden.

Allerdings weist diese bekannte Armlehne den Mangel auf, dass einem Fahrer, der den Fahrersitz beziehen und sich in diesen hineinsetzten möchte, die Armlehne stets hindernd im Wege steht. Mit anderen Worten kann die Armlehne gemäß dieser Druckschrift nicht heruntergeklappt werden, um dem Fahrer einen größeren Freiraum zum Beziehen des Kraftwagensitzes zu gewähren.

In der Druckschrift DE 4042105 C1 ist des Weiteren eine Armlehnenanordnung zur parallelen Höhenverstellung der Armlehne durch Verändern der Winkelstellung des Armlehnenträgers sowie zum Hochklappen der Armlehne in Bezug auf den Armlehnenträger angegeben. Allerdings werden der Mechanismus zur parallelen Höhenverstellung und das Hochklappen der Armlehne mittels eines in den Armlehnenträger integrierten, aufwendigen und komplizierten Zahnradmechanismus realisiert. Weiter kann in dieser Druckschrift die Armlehne lediglich hochgeklappt und nicht heruntergeklappt werden. Das Herunterklappen bietet den Vorteil, dass während des Beziehens des Fahrersitzes durch den Fahrer die heruntergeklappte Armlehne eine Stützungsfunktion für den Fahrer während des Beziehens innehat. Beispielsweise kann sich während des Beziehens des Fahrersitzes der Fahrer auf die heruntergeklappte Armlehne setzen, um sich in den oftmals beengten Raumverhältnissen einer Fahrerkanzlei möglichst genau zum Sitz hin arretieren zu können.

Aus der Druckschrift US 5,743,595 A ist eine einstellbare und schwenkbare Sitzarmlehne bekannt. Diese Armlehne ist um einen Drehpunkt schwenkbar gelagert, um den Winkel der Armlehne in Relation zu der Neigung eines Fahrzeugsitzes verändern zu können. Um die Winkeländerung herbeizuführen, wird ein Hebel betätigt. Durch das Betätigen wird eine Verzahnung mit einem Blockierelement gelöst oder verbunden.

Aus der Druckschrift US2002/0096928 A1 ist eine Armlehnenanordnung mit den Merkmalen des Oberbegriffs des Anspruchs 1 bekannt.

Eine zu lösende Aufgabe besteht daher darin, die oben genannten Probleme zu vermeiden und gleichzeitig eine Armlehnenanordnung für einen Sitz, insbesondere für einen Fahrzeugsitz, anzugeben, welche besonders einfach im Aufbau und kostengünstig herstellbar ist. Diese Aufgabe wird durch die Merkmale des Patentanspruches 1 gelöst.

Um nun eine Armlehnenanordnung anzugeben, welche herunterklappbar, einfach im Aufbau sowie kostengünstig herstellbar ist, macht die vorliegende Erfindung unter anderem von der Idee Gebrauch, eine Rast- und Verstelleinrichtung zur Einstellung eines Neigungswinkels zwischen der Armlehne und dem Armlehnenträger in einer Gebrauchsstellung und zum Herunterklappen der Armlehne von einer Gebrauchsstellung in eine Nichtgebrauchsstellung bereitzustellen. Dabei ist die Rast- und Verstelleinrichtung zum Herunterklappen der Armlehne innerhalb eines Gehäuses der Armlehne in einem Drehelement drehbar gelagert und zur Einstellung des Neigungswinkels um ihre Längsachse drehbar im Gehäuse gelagert.

Dabei bezeichnet die Gebrauchsstellung diejenige Stellung der Armlehnenanordnung, während dessen der Fahrer den Fahrzeugsitz bereits bezogen hat und nutzt, das heißt gebraucht.

Die Nichtgebrauchsstellung bezeichnet diejenige Stellung der Armlehne, während dessen die Armlehne heruntergeklappt ist. Dies kann insbesondere dann der Fall sein, wenn der Fahrer den Fahrzeugsitz gerade bezieht.

Durch den in vorliegender Armlehnenanordnung besonders einfach realisierten Mechanismus mittels des Drehelementes, in dem die Rast- und Verstelleinrichtung drehbar ist, sowie durch die Eigenschaft, dass die Rast- und Verstelleinrichtung um ihre Längsachse im Gehäuse drehbar ist, ist ein kostengünstiger und kompakter Mechanismus angeboten, bei dem sowohl eine Einstellung des Neigungswinkels als auch ein Herunterklappen der Armlehne verwirklicht ist. Auf aufwendige mechanische Mechanismen zur Realisierung des Einstellungs- und Neigungswinkels und/oder des Herunterklappens der Armlehne ist daher vorteilhaft vollständig verzichtet. Insofern weist die vorliegende Armlehnenanordnung ebenso eine besonders hohe Betriebsstabilität sowie eine hohe Lebensdauer auf.

Erfindungsgemäß umfasst die Armlehnenanordnung für einen Sitz, insbesondere für einen Fahrzeugsitz, eine Armlehne, die mittels einer Lagerachse mit einem Armlehnenträger schwenkbeweglich verbunden ist. Zudem umfasst die Armlehnenanordnung eine Rast- und Verstelleinrichtung zur Einstellung eines Neigungswinkels zwischen der Armlehne und dem Armlehnenträger in einer Gebrauchsstellung und zum Herunterklappen der Armlehne von der Gebrauchsstellung in eine Nichtgebrauchsstellung. Dabei ist die Rast- und Verstelleinrichtung zum Herunterklappen der Armlehne innerhalb eines Gehäuses der Armlehne in einem Drehelement drehbar gelagert und zur Einstellung des Neigungswinkels um ihre Längsachse drehbar im Gehäuse gelagert.

Erfindungsgemäß ist die Rast- und Verstelleinrichtung mit einer Drehspindel sowie mit einem an einem ersten Ende der Drehspindel angeordneten Spindelgriff zum handbetätigten Drehen der Drehspindel um ihre Längsachse gebildet. Dabei steht die Drehspindel mit ihrem zweiten Ende mit einem Abstütznocken, der drehfest an dem Armlehnenträger befestigt ist, mechanisch in Eingriff, wobei zur Einstellung des Neigungswinkels die Drehspindel über eine Drehbewegung des Spindelgriffes gegen den Abstütznocken bewegbar ist. Insbesondere kann durch ein Drehen der Drehspindel diese beispielsweise aus oder entlang einer Halterung für die Drehspindel heraus- oder entlang gedreht und gegen den Abstütznocken bewegt werden. Außerdem ist der Abstütznocken an der Lagerachse für die Armlehne angeordnet. Zudem ist der Spindelgriff zumindest teilweise von außen optisch sichtbar und/oder einsehbar und händisch um die Längsachse der Drehspindel drehbar. Durch die Bewegung der Drehspindel gegen den Abstütznocken wird die in der Lagerachse schwenkbeweglich angeordnete Armlehne gegen den Armlehnenträger gestützt. Somit ist der Neigungswinkel der Armlehne über ein Drehen der Drehspindel veränderbar. Insofern ist ein besonders einfacher Mechanismus dargestellt, über welchen durch ein einfaches Drehen der Drehspindel gegen den Abstütznocken ein Neigungswinkel zwischen der Armlehne und dem Armlehnenträger eingestellt werden kann.

Gemäß zumindest einer Ausführungsform ist zur Einstellung des Neigungswinkels das zweite Ende der Drehspindel innerhalb des Gehäuses in einem Gewinde geführt, wobei der Spindelgriff in der Längsrichtung ortsfest an dem oder in dem Gehäuse gelagert ist. Vorzugsweise ist im Bereich des zweiten Endes der Drehspindel in die Drehspindel selbst das Gewinde beispielsweise eingefräst. Mittels Drehen der Drehspindel durch ein Drehen des Spindelgriffes ist es somit ermöglicht, durch ein Entlangführen der Drehspindel in ihrem Gewinde, die Drehspindel selbst besonders stabil und feinjustierend einzustellen.

Gemäß zumindest einer Ausführungsform ist das zweite Ende der Drehspindel über das Gewinde in einer Führungsmutter zum Führen der Drehspindel in der Längsrichtung geführt, wobei die Führungsmutter um die Lagerachse drehbar an der Armlehne oder dem Armlehnenträger befestigt ist. Insbesondere dient die Führungsmutter zu einem möglichst genauen Arretieren des zweiten Endes an einem Kontaktbereich zwischen dem zweiten Ende und dem Abstütznocken. Insofern wird durch die Führungsmutter ein Verwackeln des zweiten Endes an dem oder in dem Bereich des Abstütznockens vermieden und das zweite Ende daher an dem Abstütznocken vorgebbar fixiert. Wird die Armlehne heruntergeklappt, ist die Führungsmutter derart ausgestaltet und innerhalb der Armlehne angeordnet, dass das zweite Ende der Drehspindel um den Abstütznocken herum geführt und von diesem gelöst wird. Insofern ist ein derartiger Lösemechanismus von dem Abstütznocken und Führungsmechanismus während des Herunterklappens durch die Führungsmutter und eine Halterung der Führungsmutter an der Lagerachse besonders einfach aufgebaut und betriebsstabil. Insbesondere kann der Abstütznocken einen Anschlag für die heruntergeklappte Armlehne bilden.

Gemäß zumindest einer Ausführungsform ist das Drehelement durch eine Drehöffnung in einem Führungselement gebildet, wobei die Drehspindel durch die Drehöffnung bis zu einem Anschlag des Spindelgriffes am Führungselement durch diese hindurchgeführt ist und eine Berandung der Drehöffnung einen Drehpunkt für das Drehelement bildet. Beispielsweise handelt es sich bei dem Führungselement um ein Metallblech, in das ein Loch als die Drehöffnung eingebracht ist. Die Berandung des Loches bildet dann den Drehpunkt, wobei auf der einen Seite des Drehpunktes, das heißt beispielsweise in Form eines ersten Hebelendes, der Spindelgriff angeordnet ist und auf der anderen Seite des Drehpunktes, beispielsweise in Form eines zweiten Hebelendes, die Drehspindel oder die restliche Ausdehnung der Drehspindel umfassend das zweite Ende angeordnet ist. Eine derartige Drehöffnung kann besonders einfach und kostengünstig in ein derartiges Metallblech eingebracht und/oder ausgeformt werden. Eine aufwendige Drehlagerung wird somit vorteilhaft vermieden.

Gemäß zumindest einer Ausführungsform ist eine, an einer der Drehspindel gegenüberliegenden Seite des Spindelgriffes, angeordnete Hebelverlängerung der Rast- und Verstelleinrichtung zum Herunterklappen der Armlehne von der Gebrauchsstellung in die Nichtgebrauchsstellung über ein in der Längsrichtung ortsfest mit dem Gehäuse verbundenes und/oder im Gehäuse gelagertes Bedienelement um den Drehpunkt drehbar. Mit anderen Worten ist in einer derartigen Ausgestaltung der Spindelgriff zwischen der Drehspindel und der Hebelverlängerung angeordnet. Beispielsweise kann es sich bei dem Bedienelement um einen Drückknopf und/oder ein sonstiges Drückelement handeln, welches mit einem freien Ende der Hebelverlängerung der Rast- und Verstelleinrichtung in Eingriff steht und beispielsweise an diesem befestigt ist. Dadurch, dass das Bedienelement in der Längsrichtung ortsfest mit dem Gehäuse verbunden und/oder in diesem geführt ist, ist unabhängig von der Kippstellung der Armlehne das Bedienelement für einen Benutzer der Armlehnenanordnung stets an der gleichen Stelle am oder innerhalb des Gehäuses angeordnet und somit unabhängig von der Stellung der Armlehne zum Armlehnenträger zumindest in dieser Längsrichtung an der gleichen Stelle angeordnet. Insbesondere kann das Bedienelement nicht mechanisch fest mit der Hebelverlängerung verbunden sein. Beispielsweise ist die Hebelverlängerung in der Längsrichtung in einer Fassung des Bedienelementes eingelassen und in dieser Fassung in der Längsrichtung beispielsweise gleit- und/oder bewegbar angeordnet. Die Fassung kann in diesem Fall das freie Ende der Hebelverlängerung lediglich in einer zur Längsrichtung vertikal verlaufenden vertikalen Richtung fixieren. Insofern kann mittels des Bedienelementes das Ende der Hebelverlängerung besonders einfach in dieser vertikal verlaufenden Richtung angehoben werden.

Gemäß zumindest einer Ausführungsform ist die Hebelverlängerung und/oder das Bedienelement mit einem Ende einer innerhalb des Gehäuses angeordneten Druckfeder mechanisch fest verbunden und zusammen mit der Druckfeder in Richtung eines Federaufpunktes des Gehäuses drückbar, wobei die Drehspindel durch das Betätigen des Bedienelementes von einem mechanischen Kontakt mit dem Abstütznocken lösbar ist, und wobei durch Einwirkung der Schwerkraft und/oder einer zusätzlichen äußeren Kraft die Armlehne in die Nichtgebrauchsstellung herunterklappbar ist. Wird das Bedienelement nicht betätigt, befindet sich die Rast- und Verstelleinrichtung in einem Rastzustand oder einer Rastposition. In einem derartigen Zustand drückt das zweite Ende der Drehspindel gegen den Abstütznocken, wodurch die gesamte Armlehne gegen den Abstütznocken abgestützt, das heißt verriegelt ist. Wird nun das Bedienelement betätigt, beispielsweise mittels Drücken des Bedienelementes in die vertikale Richtung, wird ein zweites Ende der Druckfeder gegen den Federaufpunkt des Gehäuses, also gegen das Gehäuse selbst, gedrückt, wodurch die Druckfeder gestaucht und zusammengedrückt wird. Dadurch, dass die gesamte Rast- und Verstelleinrichtung in dem Drehelement drehbar gelagert ist, wird durch ein derartiges Anheben der Hebelverlängerung auf der anderen, das heißt gegenüberliegenden Seite des Drehelementes das zweite Ende der Drehspindel von dem Kontaktbereich auf dem Abstütznocken gelöst, wodurch sich nach dem Betätigen des Bedienelementes das zweite Ende der Drehspindel und der Abstütznocken nicht mehr in direktem Kontakt miteinander befinden. Die Armlehne ist dann entriegelt und kann nach dem Entriegeln besonders einfach heruntergeklappt werden. Durch eine derartige hebelartige Ausgestaltung der Rast- und Verstelleinrichtung kann über eine einzige Betätigung, das heißt Bewegung des Bedienelementes in Richtung des Federaufpunktes, die Armlehne beispielsweise stufenlos heruntergeklappt werden.

Gemäß zumindest einer Ausführungsform ist die Hebelverlängerung in einer Führungsöffnung des Führungselementes geführt. Vorzugsweise liegen sich in einer derartigen Ausgestaltung die Führungsöffnung und die Drehöffnung des Führungselements in der Längsrichtung gegenüber, wobei zwischen beiden in der Längsrichtung der Spindelgriff angeordnet ist. In diesem Fall kann das Führungselement den Spindelgriff teilweise umlaufen und einfassen. Insbesondere kann es sich bei der Führungsöffnung um eine Öffnung in Form eines Langloches handeln, wodurch besonders einfach und kostengünstig eine effektive Führung der Hebelverlängerung insbesondere in der vertikalen Richtung durch eine Ausgestaltung der Führungsöffnung in Form eines Langloches realisiert ist.

Gemäß zumindest einer Ausführungsform sind zum Betätigen des Bedienelementes und dessen Bewegung in einer zur Längsrichtung vertikal verlaufenden Richtung sowie während des Herunterklappens zur Bewegung der Hebelverlängerung und des Spindelgriffes jeweils diesen innerhalb des Gehäuses oder durch das Gehäuse gebildete Freiräume vorgesehen. Insbesondere kann das Bedienelement zum Betätigen der Hebelverlängerung in einem derartigen Freiraum innerhalb eines Armlehnenendes der Armlehne angeordnet sein. Derartige Freiräume vermeiden daher zum einen eine mechanische Kollision zwischen dem Spindelgriff und dem Bedienelement einerseits und den restlichen Armaturbereichen der Armlehne andererseits und ermöglichen zum anderen eine möglichst kompakte und platzsparende Bauweise durch eine beispielsweise Integration des Bedienelementes und des Spindelgriffes innerhalb des Gehäuses der Armlehne, wobei trotz einer derartigen Integration des Bedienelementes und des Spindelgriffes in dem Gehäuse diese stets von außen händisch erreichbar und betreibbar sind.

Es wird darüber hinaus ein Fahrzeugsitz angegeben. Der Fahrzeugsitz umfasst zumindest eine Armlehnenanordnung, wie sie in Verbindung mit einem oder mehreren der oben genannten Ausführungsformen beschrieben ist. Das heißt, die für die hier beschriebene Armlehnenanordnung aufgeführten Merkmale sind auch für den hier beschriebenen Fahrzeugsitz offenbart und umgekehrt.

Insbesondere weist der hier beschriebene Fahrzeugsitz die in Verbindung mit der Armlehnenanordnung beschriebenen Vorteile und Wirkungen auf.

Im Folgenden werden die hier beschriebene Armlehnenanordnung sowie der hier beschriebene Fahrzeugsitz anhand von Ausführungsbeispielen und den dazugehörigen Figuren näher erläutert.

Die Figuren 1A bis 1 D zeigen in einer Schnittdarstellung ein Ausführungsbeispiel einer hier beschriebenen Armlehnenanordnung in verschiedenen Stellungen der hier beschriebenen Armlehnenanordnung.

Die Figuren 2A bis 2D zeigen in schematisch perspektivischen Unteransichten die jeweils in Figuren 1 A bis 1 D gezeigte Armlehnenanordnung in den zu den Figuren 1 A bis 1 D korrespondierenden Stellungen.

In den Figuren 3A bis 3G sind Fotografien eines Ausführungsbeispiels eines hier beschriebenen Fahrzeugsitzes umfassend zwei der hier beschriebenen Armlehnenanordnungen gezeigt.

In den Figuren 4A bis 4D sind verschiedene detaillierte Fotografien in unterschiedlichen, perspektivischen Ansichten der hier beschriebenen Armlehnenanordnung gezeigt.

In den Figuren 5A bis 5E sind in verschiedenen detaillierten, perspektivischen Fotografien verschiedene Stellungen der hier beschriebenen Armlehnenanordnung gezeigt.

In den Ausführungsbeispielen und den Figuren sind gleiche oder gleichwirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

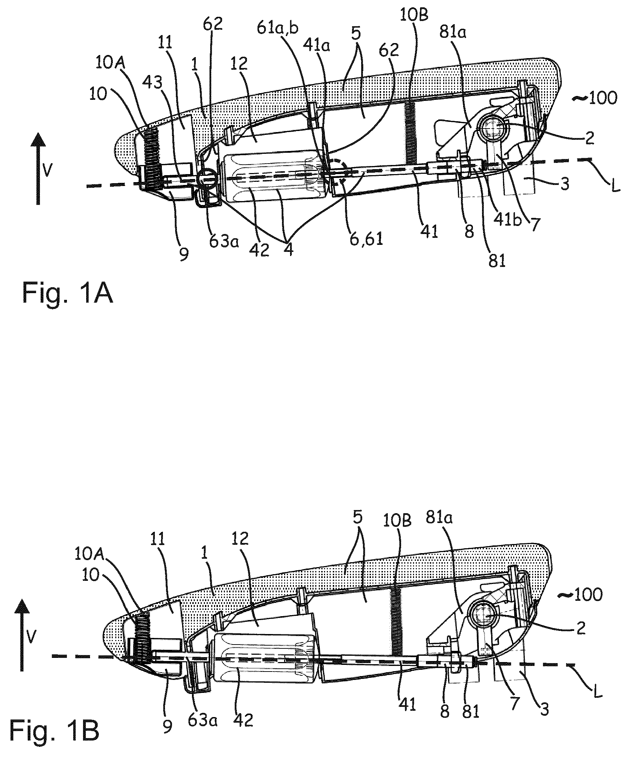

In der Figur 1A ist anhand einer schematischen Schnittdarstellung eine Armlehnenanordnung 100 für einen Sitz, insbesondere für einen Fahrzeugsitz, mit einer Armlehne 1, die mittels einer Lagerachse 2 mit einem Armlehnenträger 3 schwenkbeweglich verbunden ist, gezeigt. Die Armlehnenanordnung 100 umfasst eine Rast- und Verstelleinrichtung 4 zur Einstellung eines Neigungswinkels zwischen der Armlehne 1 und dem Armlehnenträger 3 in einer Gebrauchsstellung und zum Herunterklappen der Armlehne 1 von der Gebrauchsstellung in eine Nichtgebrauchsstellung, wobei die Rast- und Verstelleinrichtung 4 zum Herunterklappen der Armlehne 1 innerhalb eines Gehäuses 5 der Armlehne 1 in einem Drehelement 6 drehbar gelagert ist. Zur Einstellung des Neigungswinkels ist die Rast- und Verstelleinrichtung 4 um ihre Längsachse L drehbar im Gehäuse 5 gelagert.

Dabei umfasst die Rast- und Verstelleinrichtung 4 eine Drehspindel 41 sowie mit einem an einem ersten Ende 41 a der Drehspindel 41 angeordneten Spindelgriff 42 zum handbetätigten Drehen der Drehspindel 41 um ihre Längsachse L. Die Drehspindel 41 ist mit ihrem zweiten Ende 41 b mit einem Abstütznocken 7, der drehfest an dem Armlehnenträger 3 befestigt ist, mechanisch in Eingriff gebracht, wobei zur Einstellung des Neigungswinkels die Drehspindel 41 über eine Drehbewegung des Spindelgriffes 42 gegen den Abstütznocken 7 bewegbar ist. Vorliegend stützt sich das zweite Ende 41 b der Drehspindel 41 an dem Abstütznocken 7 ab, so dass sich in der Figur 1A die Armlehnenanordnung 100, das heißt die Armlehne 1 selbst, in einer Raststellung, das heißt in der Gebrauchsstellung, befindet.

Zur Einstellung des Neigungswinkels ist das zweite Ende 41 b der Drehspindel 41 innerhalb des Gehäuses 5 in einem Gewinde 8 geführt, wobei der Spindelgriff 42 in der Längsrichtung L ortsfest in einem Freiraum 12 innerhalb des Gehäuses 5 gelagert und geführt ist.

Darüber hinaus ist in der Figur 1 A gut erkennbar, dass die Drehspindel 41, insbesondere das zweite Ende 41 b der Drehspindel 41 und das in die Drehspindel 41 im zweiten Ende 41 b eingebrachte Gewinde 8, in einer Führungsmutter 81 in der Längsrichtung L geführt ist, wobei die Führungsmutter 81 um die Lagerachse 2 drehbar an dem Armlehnenträger 3 befestigt ist. Dazu ist die Führungsmutter 81 über ein Halteelement 81 a innerhalb des Gehäuses 5 an der Lagerachse 2 gelagert. Zudem ist in vorliegendem Ausführungsbeispiel das Drehelement 6 durch eine Drehöffnung 61 in einem Führungselement 62 gebildet, wobei die Drehspindel 41 durch die Drehöffnung 61 bis zu einem Anschlag des Spindelgriffes 42 am Führungselement 62 durch dieses hindurchgeführt ist und eine Berandung 61 b der Drehöffnung 61 einen Drehpunkt 61 a für das Drehelement 6 bildet.

Zudem weist die Armlehnenanordnung 100 eine, an einer der Drehspindel 41 gegenüberliegenden Seite des Spindelgriffes 42, angeordnete Hebelverlängerung 43 der Rast- und Verstelleinrichtung 4 zum Herunterklappen der Armlehne 1 von der Gebrauchsstellung in die Nichtgebrauchsstellung über ein in der Längsrichtung L ortsfest im Gehäuse 5 gelagertes Bedienelement 9 auf. Dabei ist die gesamte Anordnung aus Drehspindel 41, Spindelgriff 42 sowie der Hebelverlängerung 43 um den Drehpunkt 61 a drehbar. Insofern bilden vorliegend die Hebelverlängerung 43 und der Spindelgriff 42 zusammen ein erstes Hebelelement und die Drehspindel 41 ein zweites Hebelelement der Rast- und Verstelleinrichtung 4.

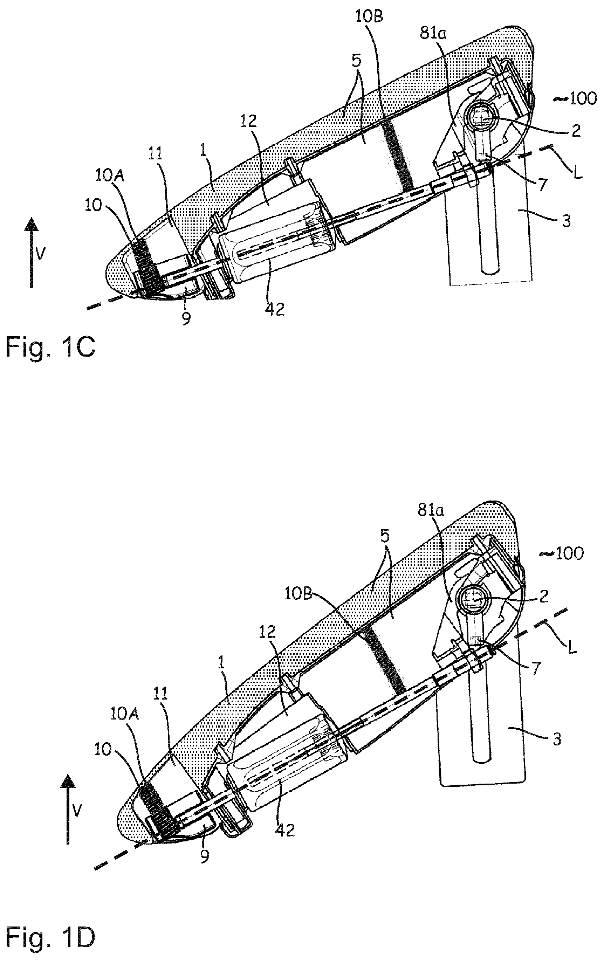

Darüber hinaus ist die Hebelverlängerung 43 und das Bedienelement 9 mit einem Ende einer Druckfeder 10 mechanisch fest verbunden und zusammen mit der Druckfeder 10 in Richtung eines Federaufpunktes 10A des Gehäuses 5 drückbar. Nach dem Zusammendrücken werden ein zweites Ende der Druckfeder 10 und der Federaufpunkt 10A aufeinander gedrückt, wodurch die Druckfeder 10 gestaucht wird. Dabei ist die Drehspindel 41 durch das Betätigen des Bedienelementes 9 von einem mechanischen Kontakt mit dem Abstütznocken 7 lösbar, wobei durch Einwirkung der Schwerkraft die Armlehne 1 in die Nichtgebrauchsstellung herunterklappbar ist (siehe auch Figur 1 D). Zum Führen der Hebelverlängerung 43 weist das Führungselement 62 eine Führungsöffnung 63a auf. Vorliegend handelt es sich dabei um ein Langloch mit einer Haupterstreckungsrichtung in einer vertikalen Richtung V. Wird nun das Bedienelement 9 in Richtung des Federaufpunktes 10A gedrückt, wird ebenso ein Ende der Hebelverlängerung 43 in diese Richtung bewegt. Dazu ist das freie Ende der Hebelverlängerung 43 in eine Einfassung des Bedienelementes 9 eingebracht, wobei die Hebelverlängerung 43 innerhalb der Einfassung des Bedienelementes 9 in der Längsrichtung L beispielsweise gleitbar ist. Alternativ ist die Hebelverlängerung 43 mechanisch und statisch fest in die Einfassung des Bedienelements 9 eingebracht (beispielsweise geklebt). In jedem Fall wird es ermöglicht, dass bei einer Bewegung des Bedienelementes 9 in der vertikalen Richtung V sich das Bedienelement 9 in dem Freiraum 11 innerhalb des Gehäuses 5 in der vertikalen Richtung ungehindert bewegen kann und das Bedienelement 9 in der Längsrichtung während einer solchen Bewegung in der vertikalen Richtung ortsfest positioniert bleibt. Ein derartiges Bedienelement 9 ist daher für den Fahrer stets an dem gleichen Ort innerhalb der Armlehnenanordnung erreichbar.

Alternativ oder zusätzlich zu der hier beschriebenen Druckfeder 10 kann in Längsrichtung L zwischen der Führungsmutter 8 und der Drehöffnung 61 (siehe Figur 1A) zumindest eine weitere Feder 10B mit ihrem ersten Ende mit der Drehspindel 41 und mit ihrem zweiten Ende innerhalb des Gehäuses 5 mit einer Innenfläche des Gehäuses 5 fest verbunden, beispielsweise verhakt, sein. Die weitere Feder 10B steht dabei ständig unter Zugspannung.

In der Figur 1 B ist gezeigt, wie das oben beschriebene Bedienelement 9 gedrückt und somit die Druckfeder 10 zusammengedrückt wird. Da die gesamte Rast- und Verstelleinrichtung 4 in der Drehöffnung 61 drehbar gelagert ist, wird durch ein derartiges Anziehen der Hebelverlängerung 43 gleichzeitig das zweite Ende 41 b der Drehspindel 41 von dem Abstütznocken 7 wegbewegt, das heißt herunterbewegt und von diesem daher gelöst.

In den Figuren 1C und 1 D ist ferner gezeigt, wie sich beispielsweise unter Einwirkung der Schwerkraft sich die Armlehne 1 stufenlos nach unten neigt und heruntergeklappt wird.

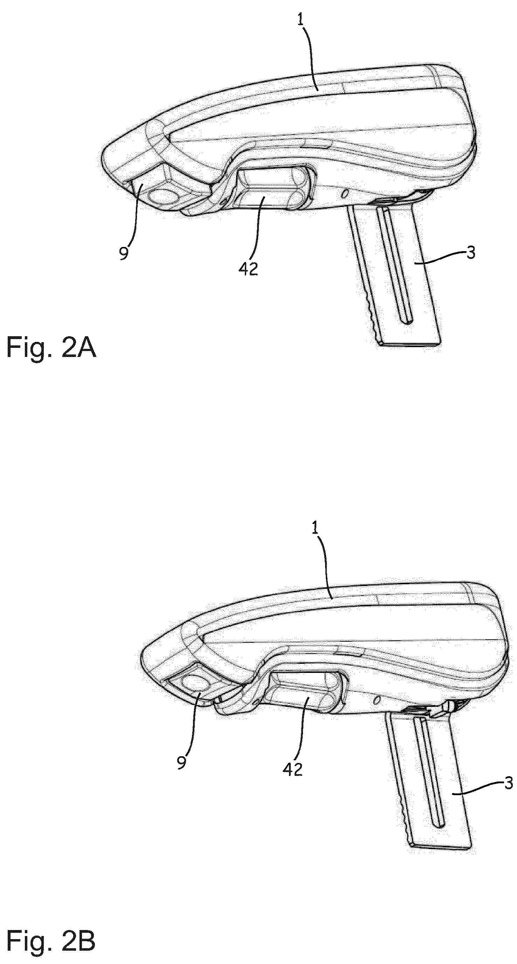

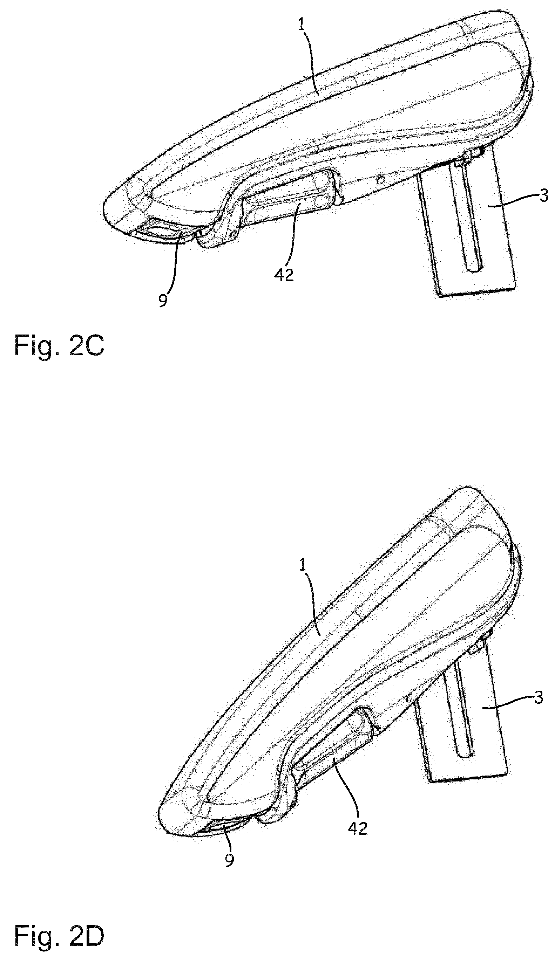

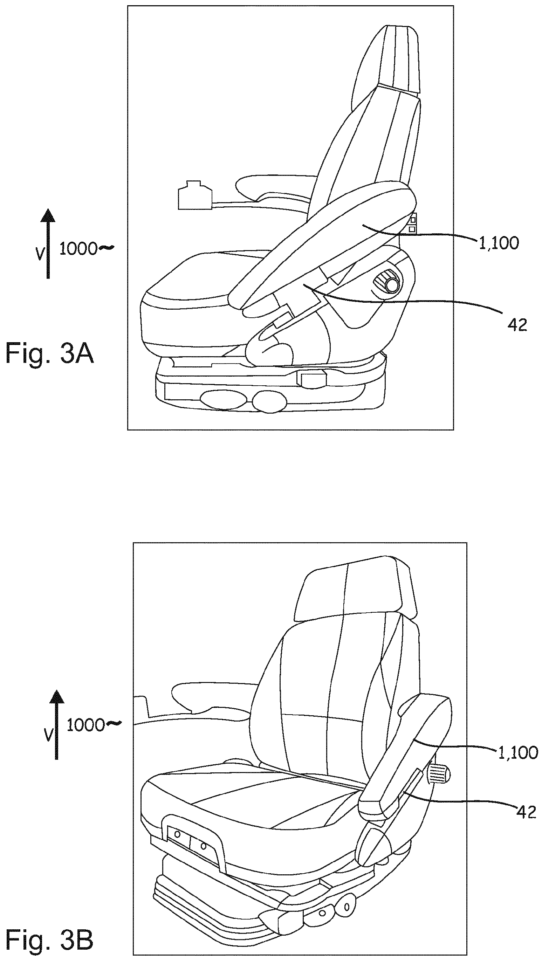

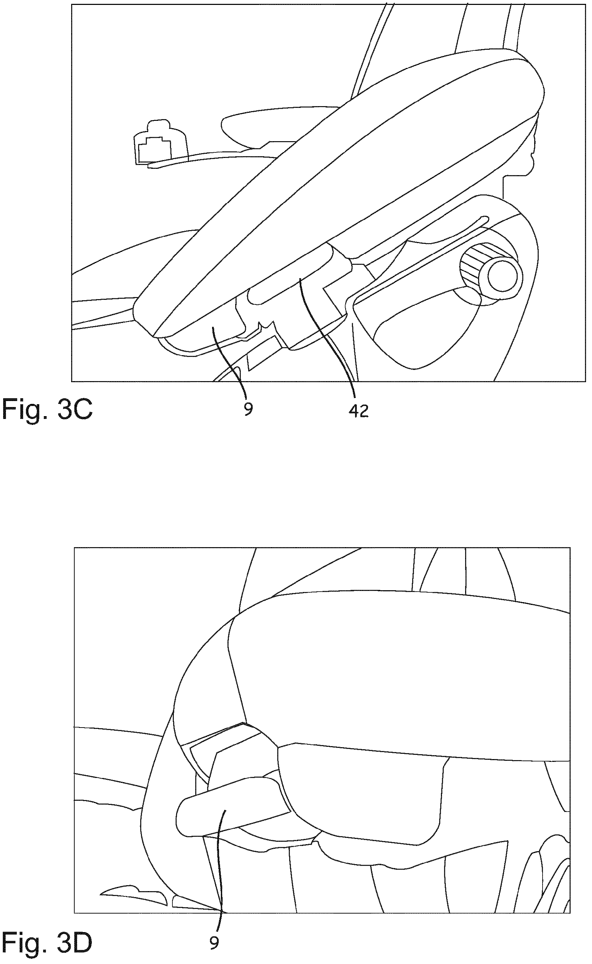

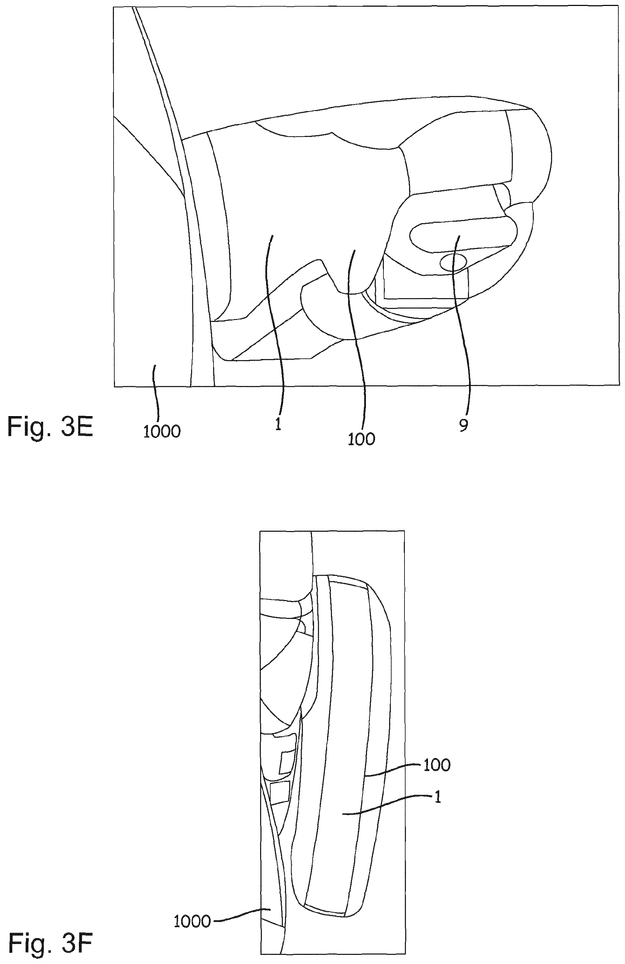

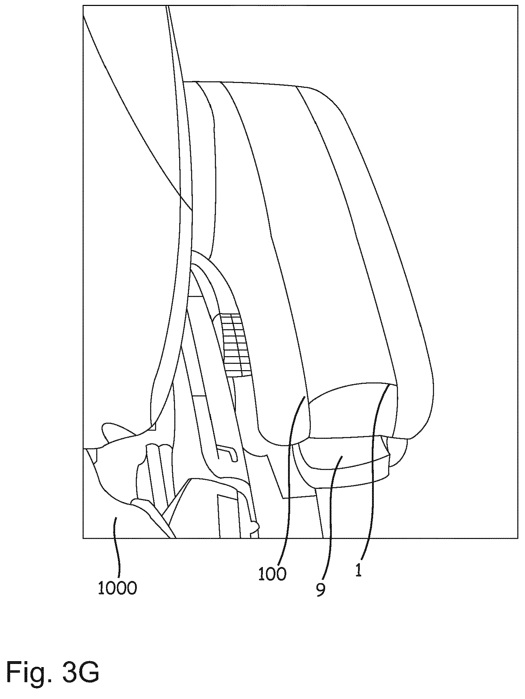

Die Figuren 2A bis 2D zeigen jeweils die in den Figuren 1 A bis 1 D gezeigte Armlehnenanordnung 100 in den dazu korrespondierenden schematisch perspektivischen Unteransichten. In den Figuren 3A bis 3G ist in jeweils unterschiedlichen perspektivischen Fotografien ein Ausführungsbeispiel eines hier beschriebenen Fahrzeugsitzes 1000 beschrieben. Erkennbar ist wiederum die bereits heruntergeklappte Armlehnenanordnung 100, wobei diese in dem vorliegenden Ausführungsbeispiel ebenso beispielsweise in vertikaler Richtung V parallel höhenverstellbar ist. Insbesondere ist in der Figur 3D eine Abbildung des hier beschriebenen Bedienelementes 9, welches besonders einfach durch händisches Heraufziehen durch den Fahrer bedienbar ist, gezeigt.

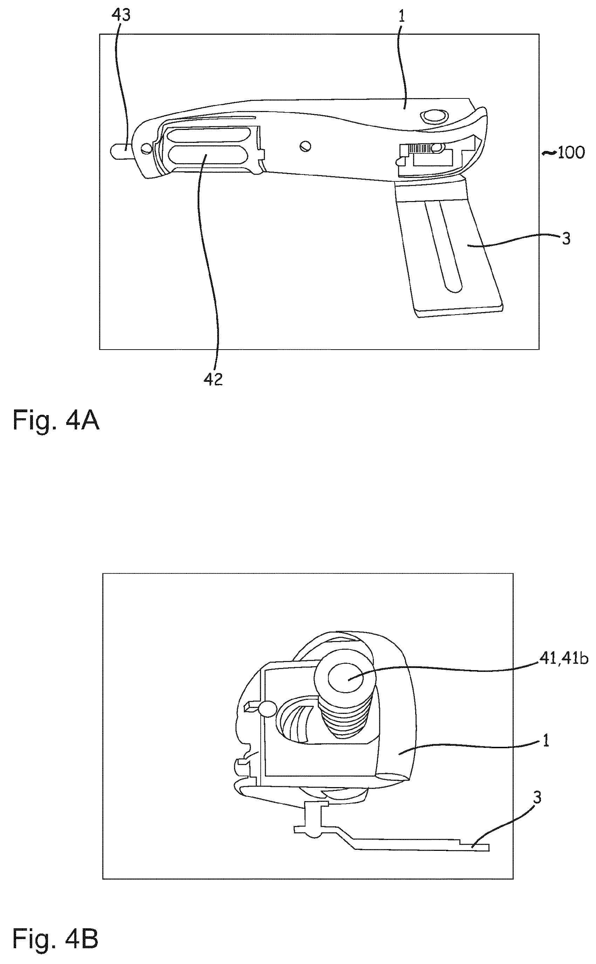

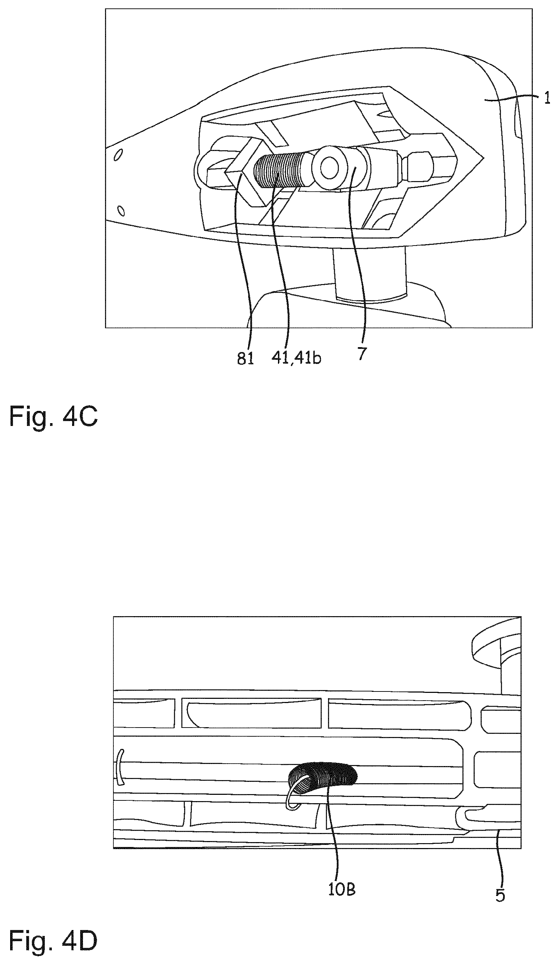

In den Figuren 4A bis 4D ist in verschiedenen perspektivischen Fotografien die hier beschriebene Armlehnenanordnung 100 gezeigt, wobei insbesondere aus den Figuren 4B und 4C besonders einfach die Führungsmutter 81, das zweite Ende 41 b der Drehspindel 41 sowie der Abstütznocken 7 dargestellt ist. Dazu ist die Armlehnenanordnung 100 gemäß den Figuren 4A bis 4D in der jeweiligen Raststellung betrieben, so dass, wie in der Figur 4C leicht erkennbar, das zweite Ende 41 b der Drehspindel 41 an dem Abstütznocken abgestützt ist. Darüber hinaus zeigt die Figur 4D eine detaillierte Darstellung der Positionierung der weiteren Feder 10B und der Verhakung in oder an einer Innwandung des Gehäuses 5.

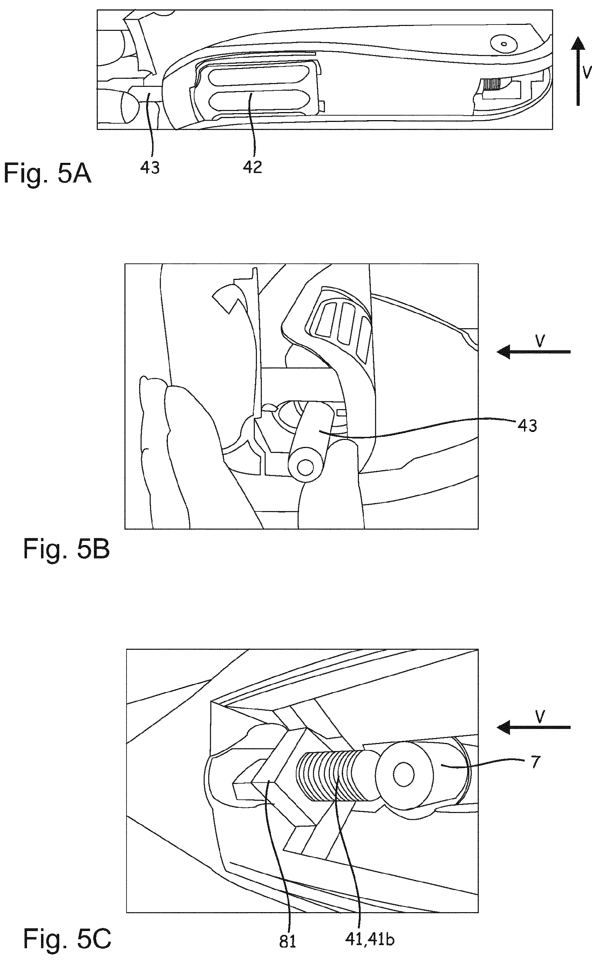

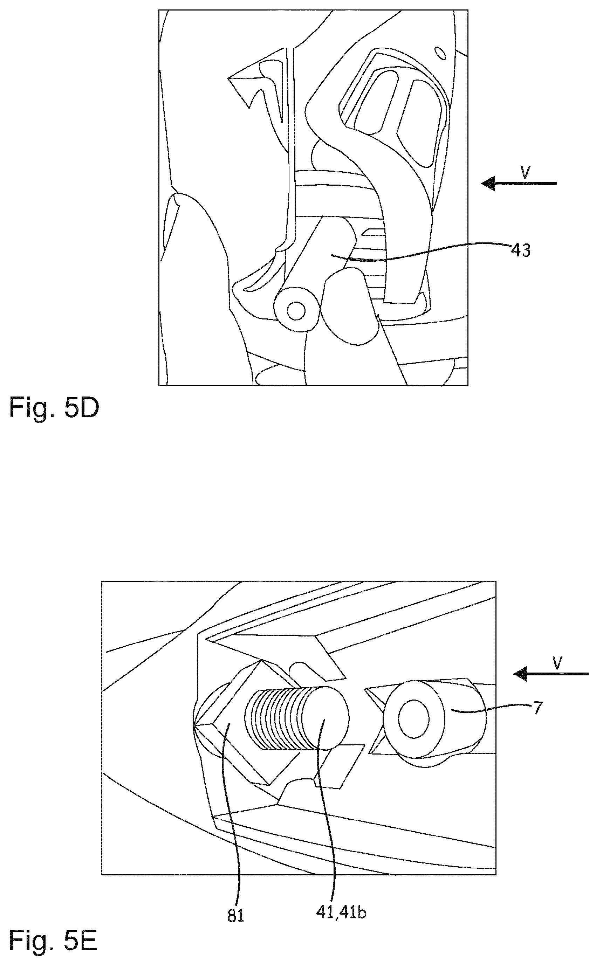

In den Figuren 5A bis 5E ist die hier beschriebene Armlehnenanordnung 100 jeweils in einer Gebrauchsstellung (das heißt Rastposition) und in einer Nichtgebrauchsstellung (das heißt Abklappposition) dargestellt. Die Gebrauchsstellung entspricht der Darstellung gemäß den Figuren 5B und 5C, wobei die Nichtgebrauchsstellung besonders deutlich aus den Figuren 5D und 5E hervorgeht. Dazu ist das zweite Hebelende 43 (das Bedienelement 9 ist hier nicht gezeigt) händisch angehoben, wodurch das zweite Ende 41 b der Drehspindel 41 von dem Abstütznocken 7 wegbewegt wird (siehe Figur 5E). Insofern kann mittels Einwirkung der Schwerkraft und/oder Einwirkung einer zusätzlichen äußeren Kraft die Armlehne 1 heruntergeklappt werden.

### Bezugszeichenliste

- L: Längsachse L
- V: vertikale Richtung V
- 1: Armlehne
- 2: Lagerachse
- 3: Armlehnenträger
- 4: Rast- und Verstelleinrichtung
- 5: Gehäuse
- 6: Drehelement
- 7: Abstütznocken
- 8: Gewinde
- 9: Bedienelement
- 10: Druckfeder
- 10A: Federaufpunkt
- 10B: weitere Feder
- 11: Freiraum
- 12: Freiraum
- 41: Drehspindel
- 41a: erstes Ende
- 41b: zweites Ende
- 42: Spindelgriff
- 43: Hebelverlängerung
- 61: Drehöffnung
- 61a: Drehpunkt
- 61b: Berandung
- 62: Führungselement
- 63a: Führungsöffnung
- 81: Führungsmutter
- 81a: Halteelement
- 100: Armlehnenanordnung
- 1000: Fahrzeugsitz

## Patentansprüche

1. Armlehnenanordnung (100) für einen Sitz, insbesondere für einen Fahrzeugsitz, mit einer Armlehne (1), die mittels einer Lagerachse (2) mit einem Armlehnenträger (3) schwenkbeweglich verbunden ist, eine Rast- und Verstelleinrichtung (4) zur Einstellung eines Neigungswinkels zwischen der Armlehne (1) und dem Armlehnenträger (3) in einer Gebrauchsstellung und zum Herunterklappen der Armlehne (1) von der Gebrauchsstellung in eine Nichtgebrauchsstellung,
**dadurch gekennzeichnet, dass**
die Rast- und Verstelleinrichtung (4) mit einer Drehspindel (41) sowie mit einem an einem ersten Ende (41a) der Drehspindel (41) angeordneten Spindelgriff (42) zum handbetätigten Drehen der Drehspindel (41) um ihre Längsachse (L) zum Herunterklappen der Armlehne (1) innerhalb eines Gehäuses (5) der Armlehne (1) in einem Drehelement (6) drehbar gelagert ist, wobei ein zweites Ende (41 b) der Drehspindel (41) mit einem Abstütznocken (7), der drehfest an dem Armlehnenträger (3) befestigt ist, mechanisch in Eingriff steht, so dass durch ein Anziehen einer Hebelverlängerung (43) gleichzeitig das zweite Ende (41 b) von dem Abstütznocken (7) gelöst wird, und zur Einstellung des Neigungswinkels die Rast- und Verstelleinrichtung (4) um die Längsachse (L) der Drehspindel (41) drehbar im Gehäuse (5) gelagert ist.

2. Armlehnenanordnung (100) nach Anspruch 1,
**dadurch gekennzeichnet,dass**
zur Einstellung des Neigungswinkels das zweite Ende (41 b) der Drehspindel (4) innerhalb des Gehäuses (5) in einem Gewinde (8) geführt ist, wobei der Spindelgriff (42) in der Längsrichtung (L) ortsfest an oder im Gehäuse (5) gelagert ist.

3. Armlehnenanordnung (100) nach dem vorhergehenden Anspruch,
**dadurch gekennzeichnet, dass**
das zweite Ende (41b) der Drehspindel (4) über das Gewinde (8) in einer Führungsmutter (81) zum Führen der Drehspindel (41) in der Längsrichtung (L) geführt wird, wobei die Führungsmutter (81) um die Lagerachse (2) drehbar an der Armlehne (1) oder dem Armlehnenträger (3) befestigt ist.

4. Armlehnenanordnung (100) nach einem der Ansprüche 1 bis 3,
**dadurch gekennzeichnet, dass**
das Drehelement (6) durch eine Drehöffnung (61) in einem Führungselement (62) gebildet ist, wobei die Drehspindel (41) durch die Drehöffnung (61) bis zu einem Anschlag des Spindelgriffs (42) am Führungselement (62) durch dieses hindurchgeführt ist und eine Berandung (61 b) der Drehöffnung (61) einen Drehpunkt (61 a) für das Drehelement (6) bildet.

5. Armlehnenanordnung (100) nach einem der Ansprüche 1 bis 4,
**dadurch gekennzeichnet, dass**
die, an einer der Drehspindel (41) gegenüberliegenden Seite des Spindelgriffs (42), angeordnete Hebelverlängerung (43) der Rast-und Verstelleinrichtung (4) zum Herunterklappen der Armlehne (1) von der Gebrauchsstellung in die Nichtgebrauchsstellung über ein in der Längsrichtung (L) ortsfest mit dem Gehäuse (5) verbundendes und/oder im Gehäuse (5) gelagertes Bedienelement (9) um den Drehpunkt (61 a) drehbar ist.

6. Armlehnenanordnung (100) nach dem vorhergehenden Anspruch,
**dadurch gekennzeichnet, dass**
die Hebelverlängerung (43) und/oder das Bedienelement (9) mit einem Ende einer innerhalb des Gehäuses (5) angeordneten Druckfeder (10) mechanisch fest verbunden und zusammen mit der Druckfeder (10) in Richtung eines Federaufpunktes (10A) des Gehäuses (5) drückbar ist und die Drehspindel (41) durch das Betätigen des Bedienelements (9) von einem mechanischen Kontakt mit dem Abstütznocken (7) lösbar ist, wobei durch Einwirkung der Schwerkraft und/oder einer zusätzlichen äußeren Kraft die Armlehne (1) in die Nichtgebrauchsstellung herunterklappbar ist.

7. Armlehnenanordnung (100) nach einem der Ansprüche 1 bis 6,
**dadurch gekennzeichnet, dass**
die Hebelverlängerung (43) in einer Führungsöffnung (63a) des Führungselements (62) geführt ist.

8. Armlehnenanordnung (100) nach einem der Ansprüchen 5 bis 6,
**dadurch gekennzeichnet, dass**
zum Betätigen des Bedienelements (9) und dessen Bewegung in einer zur Längsrichtung (L) vertikal verlaufenden Richtung (V) sowie während des Herunterklappens zur Bewegung der Hebelverlängerung (43) und des Spindelgriffs (8) jeweils diesen innerhalb des Gehäuses (5) oder durch das Gehäuse (5) gebildete Freiräume (11, 12) vorgesehen sind.

9. Fahrzeugsitz (1000),
**dadurch gekennzeichnet, dass**
dieser zumindest eine Armlehnenanordnung (100) gemäß zumindest einer der vorherigen Ausführungsformen aufweist.

## Claims

1. Armrest assembly (100) for a seat, in particular for a vehicle seat, comprising an armrest (1) which is pivotally connected to an armrest support (3) by means of a bearing pin (2), a locking and adjusting device (4) for setting an inclination angle between the armrest (1) and the armrest support (3) when in a usage position and for folding the armrest (1) down from the usage position into a non-usage position, **characterised in that** the locking and adjusting device (4) is rotatably mounted in a rotary element (6) inside a housing (5) of the armrest (1) by means of a rotary spindle (41) and a spindle grip (42) which is arranged at a first end (41 a) of the rotary spindle (41) and is used to manually rotate the rotary spindle (41) about its longitudinal axis (L) in order to fold the armrest (1) down, a second end (41 b) of the rotary spindle (41) being mechanically engaged with a supporting cam (7), which is non-rotatably fastened to the armrest support (3), so that by tightening a lever extension (43) the second end (41 b) is released from the supporting cam (7) at the same time, and the locking and adjusting device (4) being mounted in the housing (5) so as to be rotatable about the longitudinal axis (L) of the rotary spindle (41) in order to adjust the inclination angle.

2. Armrest assembly (100) according to claim 1, **characterised in that** the second end (41 b) of the rotary spindle (4) is guided inside the housing (5) in a thread (8) in order to set the inclination angle, the spindle grip (42) being mounted on or in the housing (5) such that it cannot move in the longitudinal direction (L).

3. Armrest assembly (100) according to the preceding claim, **characterised in that** the second end (41 b) of the rotary spindle (4) is guided by means of the thread (8) in a guide nut (81) for guiding the rotary spindle (41) in the longitudinal direction (L), the guide nut (81) being fastened to the armrest (1) or to the armrest support (3) so as to be rotatable about the bearing pin (2).

4. Armrest assembly (100) according to any of claims 1 to 3, **characterised in that** the rotary element (6) is formed by a rotary opening (61) in a guide element (62), the rotary spindle (41) being guided through the guide element (62) via the rotary opening (61) as far as to a stop of the spindle grip (42) on said guide element and an edge (61b) of the rotary opening (61) forming a centre of rotation (61a) for the rotary element (6).

5. Armrest assembly (100) according to any of claims 1 to 4, **characterised in that** the lever extension (43) of the locking and adjusting device (4), which extension is arranged on a side of the spindle grip (42) which is opposite the rotary spindle (41), can be rotated about the centre of rotation (61 a) by means of an operating element (9), which is connected to the housing (5) and/or is mounted in the housing (5) such that it cannot move in the longitudinal direction (L), in order to fold the armrest (1) down from the usage position into the non-usage position.

6. Armrest assembly (100) according to the preceding claim, **characterised in that** the lever extension (43) and/or the operating element (9) is mechanically rigidly connected to one end of a compression spring (10) arranged inside the housing (5) and can be pushed, together with the compression spring (10), in the direction of a spring contact point (10A) of the housing (5), and the rotary spindle (41) can be released from a mechanical contact with the supporting cam (7) by actuating the operating element (9), it being possible for the armrest (1) to be folded down into the non-usage position by the influence of gravity and/or an additional external force.

7. Armrest assembly (100) according to any of claims 1 to 6, **characterised in that** the lever extension (43) is guided in a guide opening (63a) of the guide element (62).

8. Armrest assembly (100) according to any of claims 5 to 6, **characterised in that**, in order to actuate the operating element (9) and the movement thereof in a direction (V) that is vertical with respect to the longitudinal direction (L), and to move the lever extension (43) and the spindle grip (8) when folding the armrest down, said operating element, lever extension and spindle grip are each provided inside the housing (5) or in clearances (11, 12) formed by the housing (5).

9. Vehicle seat (1000), **characterised in that** said seat comprises at least one armrest assembly (100) according to at least one of the preceding embodiments.

## Revendications

1. Agencement d'accoudoir (100) pour un siège, notamment pour un siège de véhicule, avec un accoudoir (1), qui est relié, à l'aide d'un axe de palier (2), de manière pivotante avec un support d'accoudoir (3), un dispositif d'encliquetage et de réglage (4) pour le réglage d'un angle d'inclinaison entre l'accoudoir (1) et le support d'accoudoir (3) dans une position d'utilisation et pour le rabattement de l'accoudoir (1) de la position d'utilisation vers une position de non-utilisation,
**caractérisé en ce que**
le dispositif d'encliquetage et de réglage (4) est logé de manière rotative, avec une broche rotative (41) et avec une poignée de broche (42) disposée à une première extrémité (41 a) de la broche rotative (41) pour la rotation manuelle de la broche rotative (41) autour de son axe longitudinal (L), pour le rabattement de l'accoudoir (1), à l'intérieur d'un boîtier (5) de l'accoudoir (1) dans un élément rotatif (6), une deuxième extrémité (41 b) de la broche rotative (41) étant fixée avec une came d'appui (7), qui est emboîté mécaniquement, de manière solidaire en rotation, sur le support d'accoudoir (3), de façon à ce que lors d'une traction sur un prolongement de levier (43), la deuxième extrémité (41 b) soit simultanément détachée de la came d'appui (7) et, pour le réglage de l'angle d'inclinaison, le dispositif d'encliquetage et de réglage (4), logé dans le boîtier (5) de manière rotative autour de l'axe longitudinal (L) de la broche rotative (41).

2. Agencement d'accoudoir (100) selon la revendication 1,
**caractérisé en ce que**
pour le réglage de l'angle d'inclinaison, la deuxième extrémité (41 b) de la broche rotative (4) est guidée à l'intérieur du boîtier (5) dans un filetage (8), la poignée de broche (42) étant logée de manière fixe dans la direction longitudinale (L) ou dans le boîtier (5).

3. Agencement d'accoudoir (100) selon la revendication précédente,
**caractérisé en ce que**
la deuxième extrémité (41 b) de la broche rotative (4) est guidée, par l'intermédiaire du filetage (8), dans un écrou de guidage (81) pour le guidage de la broche rotative (41) dans la direction longitudinale (L), l'écrou de guidage (81) étant fixé de manière rotative autour de l'axe de palier (2), sur l'accoudoir (1) ou sur le support d'accoudoir (3).

4. Agencement d'accoudoir (100) selon l'une des revendications 1 à 3,
**caractérisé en ce que**
l'élément rotatif (6) est constitué d'une ouverture rotative (61) dans un élément de guidage (62), la broche rotative (41) étant guidée à travers l'ouverture rotative (61) jusqu'à une butée de la poignée de broche (42) sur l'élément de guidage (62) à travers celui-ci et un bord (61 b) de l'ouverture rotative (61) formant un centre de rotation (61 a) pour l'élément rotatif (6).

5. Agencement d'accoudoir (100) selon l'une des revendications 1 à 4,
**caractérisé en ce que**
le prolongement de levier (43) du dispositif d'encliquetage et de réglage (4), disposé sur le côté de la poignée de broche (42) opposé à la broche rotative (41), est rotatif autour du centre de rotation (61 a) pour le rabattement de l'accoudoir (1) de la position d'utilisation vers la position de non-utilisation, par l'intermédiaire d'un élément de commande (9) relié de manière fixe dans la direction longitudinale (L) avec le boîtier (5) et/ou logé dans le boîtier (5).

6. Agencement d'accoudoir (100) selon la revendication précédente,
**caractérisé en ce que**
le prolongement de levier (43) et/ou l'élément de commande (9) est relié mécaniquement, de manière fixe, à l'extrémité d'un ressort de compression (10) disposé à l'intérieur du boîtier (5) et peut être comprimé, en même temps que le ressort de compression (10), en direction d'un point d'appui de ressort (10A) du boîtier (5) et la broche rotative (41) peut être détachée d'un contact mécanique avec la came d'appui (7) par l'actionnement de l'élément de commande (9), l'action de la gravité et/ou d'une force extérieure supplémentaire permettant de rabattre l'accoudoir (1) vers la position de non-utilisation.

7. Agencement d'accoudoir (100) selon l'une des revendications 1 à 6,
**caractérisé en ce que**
le prolongement de levier (43) est guidé dans une ouverture de guidage (63a) de l'élément de guidage (62).

8. Agencement d'accoudoir (100) selon l'une des revendications 5 à 6,
**caractérisé en ce que**
pour l'actionnement de l'élément de commande (9) et son mouvement dans une direction (V) s'étendant verticalement par rapport à la direction longitudinale (L), et pendant le rabattement, pour le mouvement du prolongement de levier (43) et de la poignée de broche (8), des espaces libres (11, 12), respectivement formés à l'intérieur du boîtier (5) ou formés par le boîtier (5) sont prévus.

9. Siège de véhicule(1000)
**caractérisé en ce que**
celui-ci comprend au moins un agencement d'accoudoir (100) selon au moins un des modes de réalisation précédents.
